# EUROPEAN PATENT SPECIFICATION

(11) **EP 2 475 131 B1**
(45) Date of publication and mention of the grant of the patent: **17.12.2014**
(21) Application number: 10811231.9
(22) Date of filing: 17.08.2010
(51) Int. Cl.: H04L 12/70

(54) **METHOD FOR BANDWIDTH INFORMATION NOTIFICATION, METHOD FOR SERVICE PROCESSING, NETWORK NODE AND COMMUNICATION SYSTEM**
VERFAHREN ZUR BENACHRICHTIGUNG ÜBER BANDBREITENINFORMATIONEN, VERFAHREN ZUR DIENSTVERARBEITUNG, NETZWERKKNOTEN UND KOMMUNIKATIONSSYSTEM
PROCÉDÉ DE NOTIFICATION D INFORMATIONS DE LARGEUR DE BANDE, PROCÉDÉ DE TRAITEMENT DE SERVICE, NOEUD DE RÉSEAU ET SYSTÈME DE COMMUNICATION

(30) Priority: 31.08.2009 CN 200910172870
(43) Date of publication of application: 11.07.2012
(73) Proprietor: Huawei Technologies Co., Ltd., Guangdong 518129 (CN)
(72) Inventor: LONG, Hao, Shenzhen Guangdong 518129 (CN)
(74) Representative: Isarpatent
(86) International application number: PCT/CN2010/076044
(87) International publication number: WO 2011/023071

(56) References cited:
- EP-A2- 1 983 668
- WO-A1-2007/035813
- CN-A- 1 929 406
- CN-A- 101 340 381
- CN-A- 101 631 363
- CN-A- 101 646 207
- US-A1- 2007 064 604
- US-A1- 2008 069 006
- US-B1- 6 822 940

## Description

### FIELD OF THE INVENTION

The present invention relates to the field of communication technologies, and in particular, to a method for notifying bandwidth information, a method for processing a service, a network node, and a communication system.

### BACKGROUND OF THE INVENTION

As an Internet Protocol (IP) service grows rapidly, the IP service gradually replaces a time division multiplexing (TDM) service, and becomes a mainstream service type, and network traffic is also increased rapidly. However, a traditional synchronous digital hierarchy (SDH)/multi-service transport platform (MSTP) equipment cannot make good use of a statistic multiplexing feature of a packet service, and cannot meet an ever-increasing demand for a bandwidth in another aspect. Therefore, an SDH equipment starts to be replaced by a packet transport network (PTN) equipment.

Meanwhile, a microwave is widely used in a network of an operator. Currently, a commonly used microwave is an SDH microwave and a plesiochronous digital hierarchy (PDH) microwave. As the SDH equipment is replaced by the PTN equipment, accordingly, a packet microwave starts to replace an SDH/PDH microwave equipment, and has been widely applied in the market in recent years. The packet microwave refers to a packet equipment with a microwave interface.

A microwave link differs from an optical fiber link in that the microwave link performs adaptive modulation (AM) due to weather change, which leads to bandwidth change. In addition, the changed bandwidth is definite. A transport network generally requires quite high operation, administration, and maintenance (OAM: Operation, Administration and Management) capability. However, current PTN OAM functions are merely some general operations.

During a research on the prior art, the inventor finds that: The PTN OAM functions at present are only some general operations, and therefore, after a microwave link performs adaptive modulation, bandwidth information that is allocated to a service connection cannot be notified to an endpoint of the service connection on which the microwave link is located, so that, the endpoint of the service connection still controls service traffic according to the bandwidth before the adaptive modulation, thus causing service congestion.

US 2007/0064604 A1 discloses a close-loop quality of service system that collects real-time network performance indicators at the physical, data link and network layers. Using those indicators, the system dynamically controls the network traffic in order to achieve improved performance according to the priority and policy defined by a data user or system/network administrator. Several features of this quality of service system includes (1) dynamic maximum bandwidth reallocation, (2) dynamic maximum packet sizing, (3) adaptive policing, and/or (4) real-time link status feedbacks to make more efficient use of available bandwidth and adjust to transmission requirements.

US 6,822,940 B1 discloses a method and apparatus for adaptively enforcing Quality of Service (QoS) policies for one or more flows of packets in a packet-switched network based on network feedback information. In one aspect, packets of a first group of flows are assigned to a first service level. Then-current interface congestion information for network traffic that is mapped to the first service level and that is passing through an interface of a network device in the network is received. Based on the then-current interface congestion information one or more flows from the first group of flows are selected. Packets from the one or more flows are then assigned to a second service level.

US 2008/0069006 A1 discloses methods and apparatus to provide services over integrated broadband communication systems. An example method to manage access to a communication link provided to a customer premises disclosed herein comprises determining a data rate for the communication link, determining whether the customer premises utilizes a predetermined service, identifying the communication link as disabled when the customer premises does not utilize the predetermined service and the data rate is below a first rate, and identifying the communication link as enabled for the predetermined service and disabled for at least one other service when the customer premises utilizes the predetermined service and the data rate is below the first rate and above a second rate.

### SUMMARY OF THE INVENTION

Embodiments of the present invention provide a method for notifying bandwidth information, a method for processing a service, a network node, and a communication system, so that an endpoint of a service connection on which a microwave link is located may obtain bandwidth information that is allocated to a service connection by the microwave link corresponding to current link bandwidth information.

An embodiment of the present invention provides a method for notifying bandwidth information, including:
obtaining, by a network node that is attached by a microwave link, current link bandwidth information of the microwave link;
according a preset mapping relationship between link bandwidth information and service bandwidth information of a service connection that passes through the microwave link, when a bandwidth of the microwave link changes, determining, by the network node, service bandwidth information that is allocated to the service connection that passes through the microwave link; and
transmitting, by the network node, the allocated service bandwidth information to an endpoint of the service connection through the service connection;
according to a preset mapping relationship between service bandwidth information and a waterline of a service buffer area, adjusting, by the endpoint of the service connection, the waterline to a position corresponding to the allocated service bandwidth information.

It can be seen from the preceding that, the network node that is attached by the microwave link may obtain the current link bandwidth information of the microwave link, determine, according to the mapping relationship between the link bandwidth information and the service bandwidth information, corresponding to the current link bandwidth information, service bandwidth information that is allocated to the service connection on which the microwave link is located, and transmit the allocated service bandwidth information to the endpoint of the service connection. Therefore, the endpoint of the service connection may adjust the service policy according to the allocated service bandwidth information, so that a bandwidth of the microwave link can meet a service requirement, and service congestion is avoided.

### BRIEF DESCRIPTION OF THE DRAWINGS

To describe the technical solutions in the embodiments of the present invention clearly, the accompanying drawings required for describing the embodiments are briefly introduced in the following. Apparently, the accompanying drawings are only some embodiments of the present invention, and person of ordinary skill in the art may also derive other drawings from these accompanying drawings without any creative effort.
FIG. 1 is a flowchart of a method for notifying bandwidth information according to a first embodiment of the present invention;
FIG. 2 is a flowchart of a method for notifying bandwidth information according to a second embodiment of the present invention;
FIG. 3 is a flowchart of a method for notifying bandwidth information according to a third embodiment of the present invention;
FIG. 4 is a flowchart of a method for processing a service according to an embodiment of the present invention;
FIG. 5 is a topology diagram of an end-to-end connection in a method for notifying bandwidth information according to a fourth embodiment and a fifth embodiment of the present invention;
FIG. 6 a topology diagram of an end-to-end connection in a method for notifying bandwidth information according to a sixth embodiment of the present invention;
FIG. 7 is a structural diagram of a network node according to a first embodiment of the present invention;
FIG. 8 is a structural diagram of a network node according to a second embodiment of the present invention;
FIG. 9 is a structural diagram of a network node according to a third embodiment of the present invention; and
FIG. 10 is a structural diagram of a network node according to a fourth embodiment of the present invention.

### DETAILED DESCRIPTION OF THE EMBODIMENTS

The technical solutions in the embodiments of the present invention are clearly and fully described in the following with reference to the accompanying drawings in the embodiments of the present invention. Apparently, the embodiments to be described are only a part rather than all of the embodiments of the present invention. Based on the embodiments of the present invention, all other embodiments obtained by those skilled in the art without making any creative effort shall fall within the protection scope of the present invention.

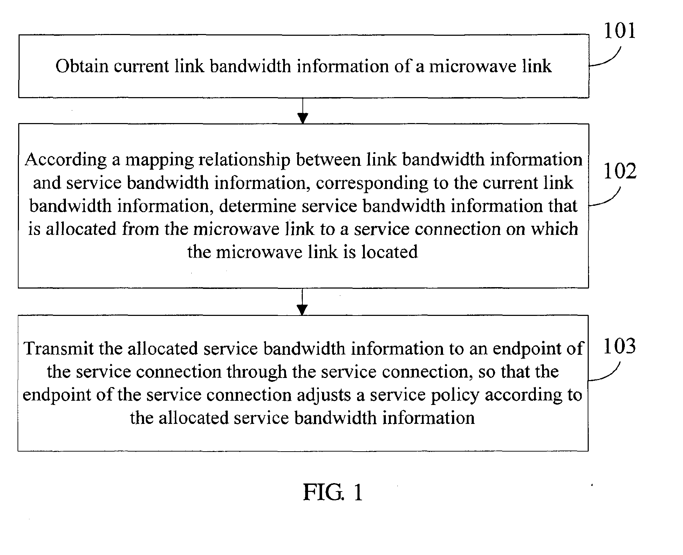

A method for notifying bandwidth information provided in an embodiment of the present invention is described first. FIG. 1 describes a procedure of a method for notifying bandwidth information according to a first embodiment. In this embodiment, a processing procedure of a network node that is attached by a microwave link is described, which includes:
101: Obtain current link bandwidth information of a microwave link.

The current link bandwidth information of the microwave link may be obtained through real-time detection or periodical detection. For example, the current link bandwidth information of the microwave link may be obtained by an adaptive modulation module of the network node.

In an embodiment of the present invention, the current link bandwidth information of the microwave link may be obtained actively in the following mode: detecting a current modulation mode of the microwave link, and obtaining bandwidth information of the microwave link under the current modulation mode, where the bandwidth information of the microwave link under the current modulation mode is the current link bandwidth information of the microwave link.

A bandwidth of the microwave link is different under different modulation modes, and the bandwidth of the microwave link under each modulation mode is definite. Therefore, corresponding bandwidth information may be obtained when the current modulation mode of the microwave link is determined. The obtained bandwidth information may be bandwidth level indication information or modulation mode information.

For example, an optimal modulation mode of the microwave link is 64 quadrature amplitude modulation (QAM), and a bandwidth of a link is 1 Gbps under this modulation mode; and when a modulation mode is 16 QAM, a bandwidth of the link is 0.6 Gbps. Therefore, a modulation mode is 64QAM, bandwidth level indication information may be 1 Gbps; and when the modulation mode is 16QAM, the bandwidth level indication information may be 0.6 Gbps. When the modulation mode is 64QAM, modulation mode information may be a 64 QAM modulation mode; and when the modulation mode is 16QAM, the modulation mode information may be a 16 QAM modulation mode. In an embodiment of the present invention, the bandwidth level indication information may also not be a specific bandwidth value, but a number that represents the bandwidth value. For example, 7 represents 1 Gbps, and 5 represents 0.6 Gbps. Therefore, in the case of the 64QAM modulation mode, the bandwidth level indication information may be 7, and in the case of the 16 QAM modulation mode, the bandwidth level indication information may be 5. Specifically, which number represents which bandwidth value may be configured as required.

102: According a mapping relationship between link bandwidth information and service bandwidth information, corresponding to the current link bandwidth information, determine service bandwidth information that is allocated from the microwave link to a service connection on which the microwave link is located.

The microwave link is one section of a multiple-section link that the service connection passes through. That is, at least one link between two network nodes of the service connection is a microwave link. The service connection may be an Ethernet connection, for example, a virtual local area network (VLAN) connection, and a provider backbone bridge-traffic engineering Ethernet switch path (PBB-TE ESP) connection. The service connection may be a label switched path (LSP) connection, specifically, may be a none-Ethernet connection, such as a Multi Protocol Label Switch label switched path (MPLS LSP) connection.

A microwave link may bear one or multiple service connections, and each service connection occupies all or part of a link bandwidth of the microwave link. The network node that is attached by the microwave link maintains service bandwidth information that is allocated to each service connection. When a bandwidth of the microwave link changes, according to a preset mapping relationship between link bandwidth information and service bandwidth information, service bandwidth information that is allocated to each service connection is determined.

103: Transmit the allocated service bandwidth information to an endpoint of the service connection through the service connection, so that the endpoint of the service connection adjusts a service policy according to the allocated service bandwidth information.

The service bandwidth information may be transmitted through a bandwidth notification message by the network node that is attached by the microwave link. The bandwidth notification message may be an alarm indication signal/suppression (AIS: Alarm Indication Signal/Suppression) message, an automatic protection switching (APS: Automatic Protection Switching) message, or a new operation, administration and maintenance (OAM: Operations, Administration, and Maintenance) message.

In an embodiment of the present invention, the service bandwidth information that is allocated to the service connection may be transmitted through an AIS message to the endpoint of the service connection on which the microwave link is located. An existing AIS message cannot carry the allocated service bandwidth information. Therefore, the existing AIS message may be extended, so that an extended AIS message can carry the allocated service bandwidth information.

In another embodiment of the present invention, the service bandwidth information that is allocated to the service connection may also be transmitted through an APS message to the endpoint of the service connection on which the microwave link is located. An existing APS message cannot carry the allocated service bandwidth information. Therefore, the existing APS message may be extended, so that an extended APS message can carry the allocated service bandwidth information.

In another embodiment of the present invention, the allocated service bandwidth information may also be transmitted through a new OAM message. The new OAM message may be a newly defined OAM message, and may also be a message obtained by extending another existing OAM message.

It can be known from the preceding that, in this embodiment, the network node that is attached by the microwave link may obtain the current link bandwidth information of the microwave link, determine, according to the mapping relationship between the link bandwidth information and the service bandwidth information, corresponding to the current link bandwidth information, the service bandwidth information that is allocated from the microwave link to the service connection on which the microwave link is located, and transmit the allocated service bandwidth information to the endpoint of the service connection, so that the endpoint of the service connection may adjust the service policy according to the allocated service bandwidth information, and therefore, a bandwidth of the microwave link can meet a service requirement, and service congestion is avoided.

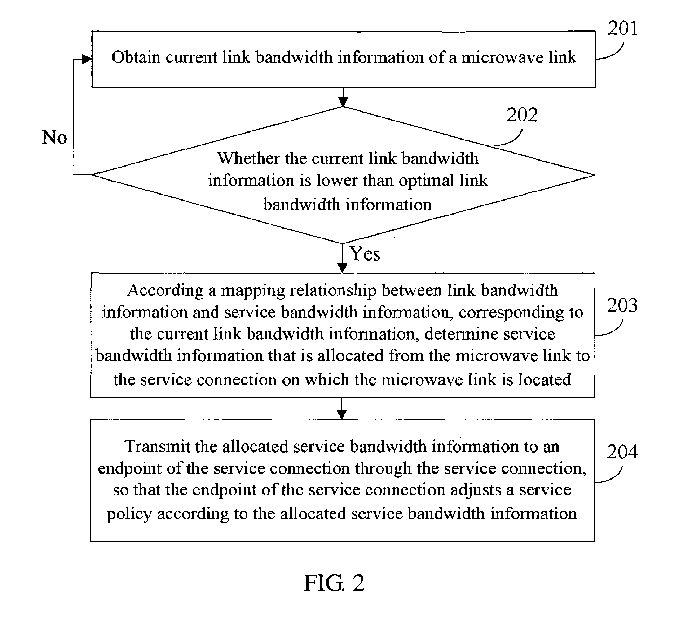

FIG. 2 describes a procedure of a method for notifying bandwidth information according to a second embodiment of the present invention. In this embodiment, a processing procedure of a network node that is attached by a microwave link is described, which includes:
201: Obtain current link bandwidth information of a microwave link.

Specific execution may be made reference to 101.

202: Determine whether the current link bandwidth information is lower than optimal link bandwidth information. If the current link bandwidth information is lower than the optimal link bandwidth information, proceed to 203; and if the current link bandwidth information is not lower than the optimal link bandwidth information, proceed to 201.

The optimal link bandwidth information is bandwidth information of the microwave link in an optimal modulation mode.

203. According a mapping relationship between link bandwidth information and service bandwidth information, corresponding to the current link bandwidth information, determine service bandwidth information that is allocated from the microwave link to the service connection on which the microwave link is located.

Specific execution may be made reference to 102.

204: Transmit the allocated service bandwidth information to an endpoint of the service connection through the service connection, so that the endpoint of the service connection adjusts a service policy according to the allocated service bandwidth information.

Specific execution may be made reference to 103.

It can be known from the preceding that, in this embodiment,, the network node that is attached by the microwave link may obtain the current link bandwidth information of the microwave link, determine, according to the mapping relationship between the link bandwidth information and the service bandwidth information, corresponding to the current link bandwidth information, the service bandwidth information that is allocated from the microwave link to the service connection on which the microwave link is located, and transmit the allocated service bandwidth information to the endpoint on the service connection, so that the endpoint of the service connection may adjust the service policy according to the allocated service bandwidth information, and therefore, a bandwidth of the microwave link can meet a service requirement, and service congestion is avoided.

With the method for notifying bandwidth information provided in the second embodiment of the present invention, only when obtained current link bandwidth information of the microwave link is lower than the optimal bandwidth information, the network node that is attached by the microwave link determines and transmits, corresponding to the current link bandwidth information, the service bandwidth information that is allocated from the microwave link to the service connection on which the microwave link is located. Therefore, if the current link bandwidth information of the microwave link is the optimal link bandwidth information, transmission of the allocated service bandwidth information to the endpoint of the service connection on which the microwave link is located may be stopped, so that, the endpoint of the service connection performs service processing by using a normal service policy, and therefore, processing volume of the network node that is attached by the microwave link may be reduced, and a full use of a microwave link resource may be ensured.

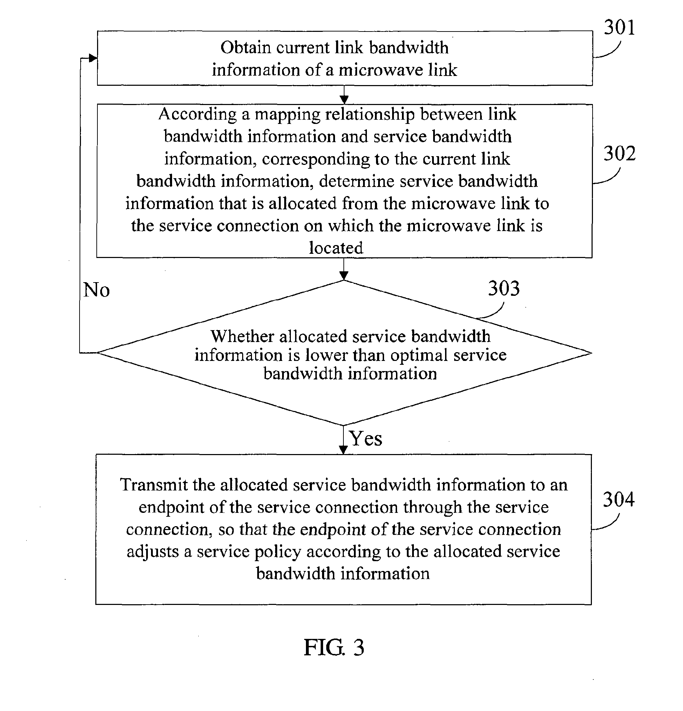

FIG. 3 describes a procedure of a method for notifying bandwidth information according to a third embodiment of the present invention. In this embodiment, a processing procedure of a network node that is attached by a microwave link is described, which include:
301: Obtain current link bandwidth information of a microwave link.

Specific execution may be made reference to step 101.

302: According a mapping relationship between link bandwidth information and service bandwidth information, corresponding to the current link bandwidth information, determine service bandwidth information that is allocated from the microwave link to the service connection on which the microwave link is located.

Specific execution may be made reference to 102.

303: Determine whether allocated service bandwidth information is lower than optimal service bandwidth information. If the allocated service bandwidth information is lower than the optimal service bandwidth information, proceed to 304; and if the allocated service bandwidth information is not lower than the optimal service bandwidth information, proceed to 301.

The optimal service bandwidth information is service bandwidth information that is allocated to a service connection by the microwave link corresponding to the optimal link bandwidth information.

304: Transmit the allocated service bandwidth information to an endpoint of the service connection through the service connection, so that the endpoint of the service connection adjusts a service policy according to the allocated service bandwidth information.

Specific execution may be made reference to 103.

It can be known from the preceding that, in this embodiment, the network node that is attached by the microwave link may obtain the current link bandwidth information of the microwave link, determine, according to the mapping relationship between the link bandwidth information and the service bandwidth information, corresponding to the current link bandwidth information, the service bandwidth information that is allocated from the microwave link to the service connection on which the microwave link is located, and transmit the allocated service bandwidth information to the endpoint of the service connection, so that the endpoint of the service connection may adjust the service policy according to the allocated service bandwidth information, and therefore, a bandwidth of the microwave link can meet a service requirement, and service congestion is avoided.

With the method for notifying bandwidth information provided in the third embodiment of the present invention, only when the service bandwidth information that is allocated to the service connection is lower than the optimal service bandwidth information, corresponding to the current link bandwidth information, the network node that is attached by the microwave link transmits the allocated service bandwidth information. Therefore, corresponding to the current link bandwidth information, if the information of the service bandwidth that is allocated to the service connection is the optimal service bandwidth information, transmission of the allocated service bandwidth information to the endpoint of the service connection on which the microwave link is located may be stopped, so that the endpoint of the service connection performs service processing by using a normal service policy, and therefore, processing volume of the network node that is attached by the microwave link may be reduced, and a full use of a microwave link resource may be ensured.

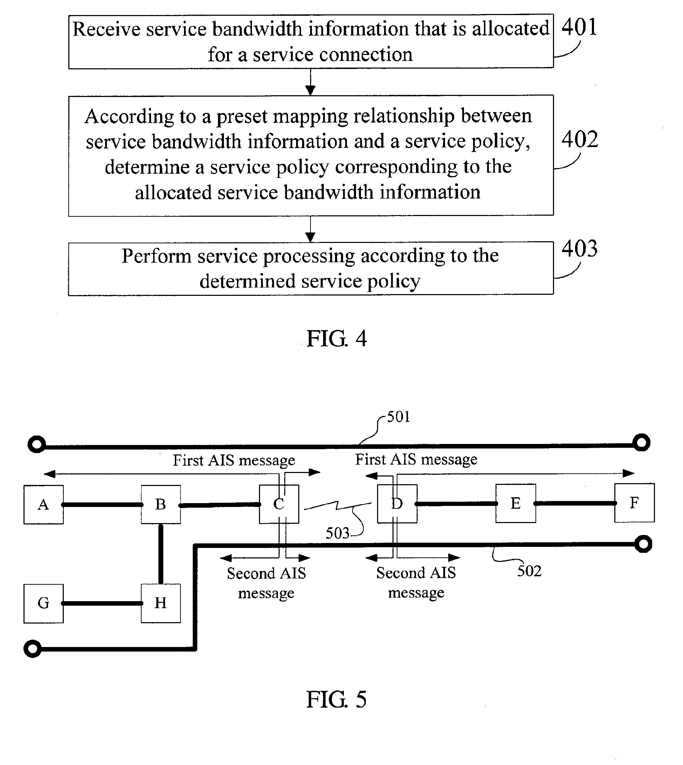

FIG. 4 describes a procedure of a method for processing a service according to an embodiment. In this embodiment, a processing procedure of an endpoint of a service connection on which a microwave link is located is described, which includes:
401: Receive service bandwidth information that is allocated for a service connection. The allocated service bandwidth information is determined, according to a mapping relationship between link bandwidth information and service bandwidth information, by a network node that is attached by a microwave link, and the allocated service bandwidth information is service bandwidth information that is allocated to the service connection corresponding to current link bandwidth information.

In an embodiment of the present invention, when the current link bandwidth information of the microwave link is lower than optimal link bandwidth information, the allocated service bandwidth information may be periodically or non-periodically transmitted by the network node that is attached by the microwave link.

402: According to a preset mapping relationship between service bandwidth information and a service policy, determine a service policy corresponding to the allocated service bandwidth information.

A mapping relationship between service bandwidth information and a service policy may be preset, so that after the service bandwidth information that is allocated to the service connection is received, the service policy corresponding to the allocated service bandwidth information may be determined. The service policy may specifically be a quality of service (QoS: Quality of Service) policy, an access control policy, or a service switching policy.

For example, in an embodiment of the present invention, a mapping relationship between service bandwidth information and a QoS policy may be preset, and therefore, after the allocated service bandwidth information is received, the QoS policy corresponding to the allocated service bandwidth information may be determined, so that service processing is performed according to the determined QoS policy. Specifically, the endpoint of the service connection may preset a mapping relationship between service bandwidth information and a waterline of a service buffer area. For example, when a bandwidth of the microwave link is larger, a larger service buffer area may be set; and when a bandwidth of the microwave link is smaller, a smaller service buffer area may be set. Therefore, after receiving the allocated service bandwidth information, the endpoint of the service connection adjusts the waterline to a position corresponding to a bandwidth size that is indicated by the allocated service bandwidth information. Therefore, a size of the service buffer area is adjusted, and adjustment of the QoS policy is implemented.

In another embodiment of the present invention, a mapping relationship between service bandwidth information and a service switching policy may be preset, and therefore, after the allocated service bandwidth information is received, the service switching policy corresponding to the allocated service bandwidth information may be determined, a service is switched over to a protection path according to the determined service switching policy. The service may be partly or fully switched over to the protection path according to different service switching policies.

It should be noted that if a plurality of different pieces of allocated service bandwidth information are received, the plurality of different pieces of allocated service bandwidth information are corresponding to a plurality of different bandwidths. At this time, allocated service bandwidth information that is corresponding to the smallest bandwidth may be selected.

403: Perform service processing according to the determined service policy.

Specifically, the service processing may be performed according to the QoS policy corresponding to the allocated service bandwidth information, the access control policy corresponding to the allocated service bandwidth information, or the service switching policy corresponding to the allocated service bandwidth information.

It can be seen from the preceding that, in this embodiment, the endpoint of the service connection on which the microwave link is located may receive the service bandwidth information that is allocated to the service connection, where the service bandwidth information is transmitted by the network node that is attached by the microwave link, and adjust the service policy according to the allocated service bandwidth information, so that a bandwidth of the microwave link can meet a service requirement, and service congestion is avoided.

In an another embodiment of the present invention, only when the current link bandwidth information of the microwave link is lower than the optimal link bandwidth information, the network node that is attached by the microwave link transmits the service bandwidth information that is allocated to the service connection to the endpoint of the service connection. Therefore, if the endpoint of the service connection on which the microwave link is located does not received the allocated service bandwidth information within preset time, it may be considered that the current link bandwidth information of the microwave link is the optimal link bandwidth information, that is, the allocated service bandwidth information is optimal service bandwidth information, which may reduce processing volume of the network node that is attached by the microwave link, so that service processing is performed by using a normal service policy, and a full use of a microwave link resource is ensured. The normal service policy may be a normal QoS policy, a normal access control policy, or a normal service switching policy. When the service policy is a normal service switching policy, the service is switched over from the protection path back to a working path.

In another embodiment of the present invention, only when the service bandwidth information that is allocated to the service connection is lower than the optimal service bandwidth information, corresponding to the current link bandwidth information, the network node that is attached by the microwave link transmits the allocated service bandwidth information to the endpoint of the service connection. Therefore, if the endpoint of the service connection on which the microwave link is located does not receive the allocated service bandwidth information within preset time, it may be considered that the service bandwidth information that is allocated from the microwave link to the service connection corresponding to the current link bandwidth information is the optimal service bandwidth information, so that service processing is performed by using a normal service policy, which may reduce processing volume of the network node that is attached by the microwave link, and ensure a full use of a microwave link resource. The normal service policy may be a normal QoS policy, a normal access control policy, or a normal service switching policy. When the service policy is a normal service switching policy, the service is switched over from the protection path back to the working path.

With specific examples, a method for notifying bandwidth information according to a fourth embodiment of the present invention is described as follows.

FIG. 5 describes a topology of a network connection of the method for notifying bandwidth information according to the fourth embodiment of the present invention. As shown in FIG. 5, a first service connection 501 passes through a network node A, a network node B, a network node C, a network node D, a network node E, and a network node F; and a second service connection 502 passes through a network node G, a network node H, the network node B, the network node C, the network node D, the network node E, and the network node F. A link between the network node C and the network node D is a microwave link 503. The network node A and the network node F are endpoints of the first service connection 501; and the network node G and the network node F are endpoints of the second service connection 502. In some embodiments, the link between the network node C and the network node D is a microwave link, but a principle of the present invention may be applicable to any type of communication links, for example, a satellite link with a variable bandwidth, a passive optical network link, and a digital subscriber line link.

It is assumed that, in a normal situation, the microwave link 503 between the network node C and the network node D adopts a 64 QAM modulation mode, and an optimal bandwidth of the link is 1 Gbps. Optimal service bandwidths that are allocated to the first service connection 501 and the second service connection 502 are 500 Mbps and 300 Mbps respectively. When the environment changes, for example, when it rains, the modulation mode is reduced to a 16 QAM modulation mode, and a link bandwidth of the microwave link 503 is reduced to 0.6 Gbps. It is determined, according to a mapping relationship between link bandwidth information and service bandwidth information, that a first service bandwidth that is allocated from the microwave link 503 to the first service connection 501 is 200 Mbps, and a second service bandwidth that is allocated from the microwave link 503 to the second service connection 502 is 150 Mbps.

The network node C and the network node D transmit a first AIS message on the first service connection 501 and transmit a second AIS message on the service connection 502 when the bandwidths that are allocated from the current microwave link 503 to the first service connection 501 and the second service connection 502 are lower than optimal service bandwidths. After the first AIS message and the second AIS message are extended, the first AIS message carries first service bandwidth information that is allocated to the first service connection 501 from the microwave link under a current modulation mode, and the second AIS message carries second service bandwidth information that is allocated to the second service connection 502 from the microwave link under the current modulation mode. Specifically, the network node C may transmit the first AIS message to the network node A and/or the network node F, and may transmit the second AIS message to the network G and/or the network node F. The network D may transmit the first AIS message to the network node A and/or the network node F, and may transmit the second AIS message to the network G and/or the network node F.

It should be noted that, in this embodiment of the present invention, the network node that is attached by the microwave link may carry the first service bandwidth information and the second service bandwidth information through an AIS message, and may also carry the first service bandwidth information and the second service bandwidth information through another specific type of message, for example, an APS message or a new OAM message. The AIS message and another specific type of message are uniformly understood as a bandwidth notification message.

Processing of the first service connection 501 is taken as an example for description in the following. A processing process of the second service connection 502 is similar to that of the first service connection 501, which is not detailed here.

The first AIS message is extended to carry a link bandwidth type-length-value (TLV) object, and the link bandwidth TLV object carries the first service bandwidth information that is allocated to the first service connection 501 corresponding to the current link bandwidth information. The first service bandwidth information may be a specific bandwidth value, and may also be a bandwidth level indication.

After the network node A and the network node F receive the first service information bandwidth that is allocated to the first service connection 501 corresponding to the current link bandwidth information, a service policy may be adjusted according to the first allocated service bandwidth information.

A specific implementation mode may be: A mapping relationship between the first service bandwidth information that is allocated to the first service connection and a QoS policy of the first service connection is configured on the network nodes A and F, and when receiving the first service bandwidth information of the first service connection 501, the network nodes A and F start using a QoS policy corresponding to the first service bandwidth information, so that a service is controlled at ingresses (the network nodes A and F) of the first service connection 501, and therefore, a congestion situation is avoided when the service passes through the microwave link.

Another specific implementation mode may be: A mapping relationship between the first service bandwidth information that is allocated to the first service connection 501 and a service switching policy is configured on the network nodes A and F, when receiving the first service bandwidth information of the first service connection 501, the network nodes A and F start using a service switching policy corresponding to the first service bandwidth information, and part of or all services are switched over to a protection path.

When the environment turns better, and the microwave link is restored to an optimal modulation mode, the network nodes C and D stop transmitting the first AIS message.

When the network nodes A and F fail to receive the AIS message that carries the first service bandwidth information, service processing may be performed by using a normal service policy.

It can be known from the preceding that, in this embodiment, the network node that is attached by the microwave link may obtain the current link bandwidth information, according to the mapping relationship between the link bandwidth information and the service bandwidth information, corresponding to the current link bandwidth information, determine the service bandwidth information that is allocated to the service connection on which the microwave link is located, and transmit the allocated service bandwidth information to the endpoint of the service connection, so that the endpoint of the service connection may adjust the service policy according to the allocated service bandwidth information, and therefore, a bandwidth of the microwave link can meet a service requirement, and service congestion is avoided.

With the method for notifying bandwidth information provided in the fourth embodiment of the present invention, if the modulation mode of the microwave link 503 is reduced to a 16 QAM modulation mode, the link bandwidth of the microwave link 503 is reduced to 0.6 Gbps. It is determined, according to the mapping relationship between the link bandwidth information and the service bandwidth information, that the first service bandwidth that is allocated from the microwave link 503 to the first service connection 501 is 500 Mbps, and the second service bandwidth that is allocated from the microwave link 503 to the second service connection 502 is 50 Mbps. That is, the first service bandwidth that is allocated to the first service connection 501 is still an optimal service bandwidth. Therefore, the network node C may not transmit the first AIS message to the network node A and/or the network node F, and the network node D may also not transmit the first AIS message to the network node A and/or the network node F.

A method for notifying bandwidth information provided in a fifth embodiment of the present invention is described by still taking the scenario described in FIG. 5 as an example. As shown in FIG. 5, the first service connection 501 passes through the network node A, the network node B, the network node C, the network node D, the network node E, and the network node F; and the second service connection 502 passes through the network node G, the network node H, the network node B, the network node C, the network node D, the network node E, and the network node F. The link between the network node C and the network node D is the microwave link 503. The network node A and the network node F are endpoints of the first service connection 501; and the network node G and the network node F are endpoints of the second service connection 502. The service connection 501 and the second service connection 502 may specifically be LSPs.

It is assumed that, in a normal situation, the microwave link 503 between the network node C and the network node D adopts a 64 QAM modulation mode, and an optimal link bandwidth is 1 Gbps. Optimal service bandwidths that are allocated to the first service connection 501 and the second service connection 502 are 500 Mbps and 300 Mbps respectively. The network nodes C and D obtain current link bandwidth information of the microwave link 503 in real time, and periodically transmit a first bandwidth notification message to the network node A and/or the network node F through the first service connection 501 in a normal period, where the first bandwidth notification message carries first service bandwidth information that is allocated from the microwave link to the first service connection 501 corresponding to the link current bandwidth information; and periodically transmit a second bandwidth notification message to the network node G and/or the network node F through the second service connection 502 in a normal period, where the second bandwidth notification message carries second service bandwidth information that is allocated from the microwave link to the second service connection 502 corresponding to the current link bandwidth information. The bandwidth notification message may carry a link bandwidth TLV object, and the link bandwidth TLV object carries service bandwidth information that is allocated to a corresponding service connection. The service bandwidth information may be a specific bandwidth value, and may also be a bandwidth level indication.

When the environment changes, for example, when it rains, a modulation mode of the microwave link 503 is reduced to a 16 QAM modulation mode, and a link bandwidth of the microwave link 503 is reduced to 0.6 Gbps. It is determined, according to a mapping relationship between link bandwidth information and service bandwidth information, that a first service bandwidth that is allocated from the microwave link 503 to the first service connection 501 is 200 Mbps, and a second service bandwidth that is allocated from the microwave link 503 to the second service connection 502 is 150 Mbps.

Processing of the second service connection 502 is taken as an example for description in the following. A processing process of the first service connection 501 is similar to that of the second service connection 502, which is not detailed here.

The network nodes C and D transmit the second bandwidth notification message in several frames at a higher frequency on the second service connection 502 to the network node G and/or the network node F when the second service bandwidth that is allocated to the second service connection 502 from the current microwave link 503 is lower than an optimal service bandwidth, so as to quickly notify a change of the service bandwidth. The second bandwidth notification message is subsequently transmitted in a normal period. For example, in a normal situation, a normal period of transmitting the second bandwidth notification message is 1 second. When the second service bandwidth changes, the first three frames of the second bandwidth notification message is transmitted in a period of 10 milliseconds, and subsequently, a period of transmitting the second bandwidth notification message is restored to 1 second.

The network node G and/or the network node F receives allocated service bandwidth information, where the allocated service bandwidth information is the second service bandwidth information that is allocated from the microwave link to the second service connection 502 corresponding to the current link bandwidth information. The network node G and/or the network node F may adjust a service policy according to the second service bandwidth information.

A specific implementation mode may be: A mapping relationship between the second service bandwidth information and a QoS policy of a service connection is configured on the network nodes G and F, and when receiving the second service bandwidth information that is allocated to a corresponding service connection under a current modulation mode, where the second service bandwidth is a service bandwidth of the microwave link, the network nodes G and F start using a QoS policy corresponding to the second service bandwidth information, so that a service is controlled at ingresses (the network nodes G and F) of the service connection, and therefore, a congestion situation is avoided when the service passes through the microwave link.

Another specific implementation mode may be: A mapping relationship between the second service bandwidth information and a service switching policy is configured on the network nodes A and F, when receiving the second service bandwidth information under a current modulation mode of the microwave link, the network nodes A and F start using a service switching policy corresponding to the second service bandwidth information, and part of or all services are switched over to a protection path.

It can be seen from the preceding that, in this embodiment, the network node that is attached by the microwave link may obtain the current link bandwidth information of the microwave link, determine, according to the mapping relationship between the link bandwidth information and the service bandwidth information, corresponding to the current link bandwidth information, service bandwidth information that is allocated to the service connection on which the microwave link is located, and transmit the allocated service bandwidth information to the endpoint of the service connection, so that the endpoint of the service connection may adjust the service policy according to the allocated service bandwidth information, and therefore, a bandwidth of the microwave link can meet a service requirement, and service congestion is avoided.

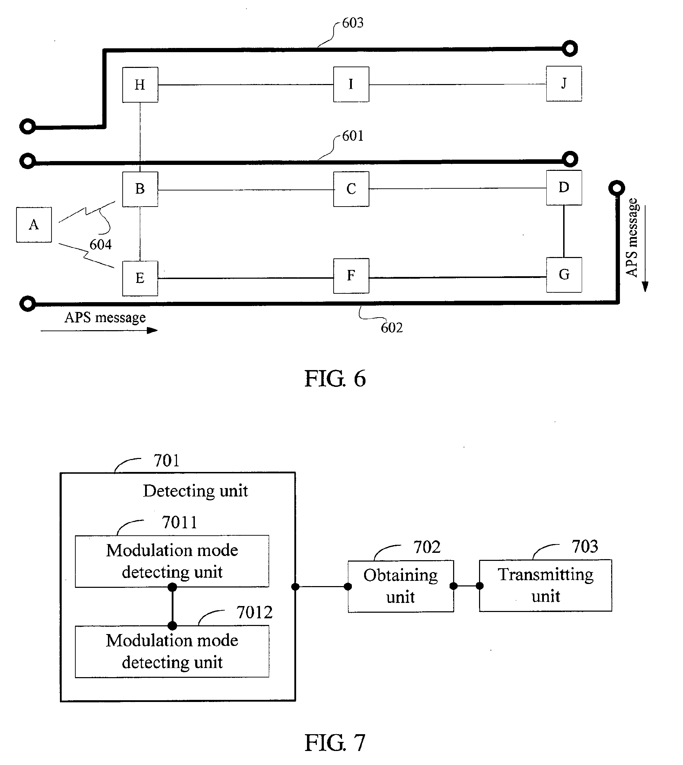

A method for notifying bandwidth information provided in a sixth embodiment of the present invention is described in the following by taking a scenario described in FIG. 6 as an example. As shown in FIG. 6, three end-to-end service connections are: a first service connection 601, a second service connection 602, and a third service connection 603 respectively. The first service connection 601 and the second service connection 602 form a protection group, the first service connection 601 is a working path, and the second service connection 602 is a protection path. The first service connection 601 passes through a network node A, a network node B, a network node C, and a network node D; and the third service connection passes through the network node A, the network node B, a network node H, a network node I, and a network node J. A link between the network node A and the network node B is a microwave link 604, the first service connection 601 and the third service connection 603 pass through the microwave link 604. The second service connection 602 passes through the network node A, a network node E, a network node F, a network node G, and the network node D.

It is assumed that, in a normal situation, the microwave link 604 adopts a 64 QAM modulation mode, and a bandwidth is 1 Gbps. Service bandwidths that are allocated to the first service connection 601 and the third service connection 603 are 400 Mbps and 300 Mbps respectively. When the environment changes, for example, when it rains, a modulation mode is reduced to a 16 QAM modulation mode, the bandwidth is reduced to 0.6 Gbps. It is determined, according to a mapping relationship between link bandwidth information and service bandwidth information, that a first service bandwidth that is allocated from the microwave link 604 to the first service connection 601 is 200 Mbps, and a second service bandwidth that is allocated from the microwave link 604 to the third service connection 603 is 160 Mbps. The first service connection 601 and the second service connection 602 are taken as examples to specifically describe bandwidth notification using an APS message in the following.

Specifically, when the network node A acquires that a service bandwidth that is allocated to the first service connection 601 is lower than an optimal service bandwidth, through an APS message transmitted by the protection path 602, the network node A carries first service bandwidth information that is allocated from the current microwave link to the first service connection 601. If the second service connection 602 has another microwave link, the APS message may further carry second service bandwidth information that is allocated from another microwave link to the second service connection 602. In addition to transmitting the APS message, the network node A may also, according to the current first service bandwidth information of the first service connection 601 and/or the current second service bandwidth information of the second service connection 602, based on a preset switching rule, partly or fully switch traffic flowing in a direction from the network node A to the network node D over to the second service connection 602, where the traffic is borne in the first service connection 601. Service bandwidth information may be a specific bandwidth value, and may also be a bandwidth level indication.

After receiving the APS message transmitted by the network node A, the network node D partly or fully switches, according to the current first service bandwidth information of the first service connection 601 and/or the current second service bandwidth information of the second service connection 602, where the current first service bandwidth information of the first service connection 601 and/or the current second service bandwidth information of the second service connection 602 is carried in the APS message, based on the preset switching rule, traffic flowing in a direction from the network node D to the network node A over to the second service connection 602, where the traffic is borne in the first service connection 601.

It should be noted that in specific implementation, it is not necessary that only when a service bandwidth that is allocated to a service connection is lower than an optimal bandwidth, allocated service bandwidth information is carried in an APS message. Service bandwidth information of the working path and the protection path may also be always carried in a periodically transmitted APS message.

It can be seen from the preceding that, in this embodiment, the network node that is attached by the microwave link may obtain current link bandwidth information of the microwave link, determine, according to the mapping relationship between the link bandwidth information and the service bandwidth information, corresponding to the current link bandwidth information, service bandwidth information that is allocated to a service connection on which the microwave link is located, and transmit the allocated service bandwidth information to an endpoint of the service connection, so that the endpoint of the service connection may adjust a service policy according to the allocated service bandwidth information, and therefore, a bandwidth of the microwave link can meet a service requirement, and service congestion is avoided.

It should be noted that the preceding method embodiments are described as a series of combinations of actions in order to facilitate description. However, those skilled in the art should understand that the present invention is not limited to a described action sequence, because some steps may be performed in another sequence, or may be performed concurrently according to the present invention. Those skilled in the art should also understand that the embodiments described in the specification are exemplary embodiments, involved actions and modules are not definitely needed in the present invention.

A network node provided in an embodiment of the present invention is introduced in the following. FIG. 7 describes a structure of a network node according to a first embodiment, which includes:

An obtaining unit 701 is configured to obtain current link bandwidth information of a microwave link.

The current link bandwidth information of the microwave link may be obtained by using real-time detection or periodical detection.

As shown in FIG. 7, according to an embodiment of the present invention, the obtaining unit 701 may include: a modulation mode detecting unit 7011, configured to detect a current modulation mode of the microwave link; and a bandwidth information obtaining unit 7012, configured to obtain bandwidth information of the microwave link under the current modulation mode that is detected by the modulation mode detecting unit 7011.

A determining unit 702 is configured to determine, according a mapping relationship between link bandwidth information and service bandwidth information, corresponding to the current link bandwidth information obtained by the obtaining unit 701, service bandwidth information that is allocated to a service connection on which the microwave link is located.

A transmitting unit 703 is configured to transmit the service bandwidth information that is allocated to the service connection to an endpoint of the service connection through the service connection, where the service bandwidth information is determined by the determining unit 702, so that the endpoint of the service connection adjusts a service policy according to the allocated service bandwidth information.

It can be seen from the preceding that, in this embodiment, the network node may obtain the current link bandwidth information of the microwave link, determine, according to the mapping relationship between the link bandwidth information and the service bandwidth information, corresponding to the current link bandwidth information, the service bandwidth information that is allocated to the service connection on which the microwave link is located, and transmit the allocated service bandwidth information to the endpoint of the service connection, so that the endpoint of the service connection may adjust the service policy according to the allocated service bandwidth information, and therefore, a bandwidth of the microwave link can meet a service requirement, and service congestion is avoided.

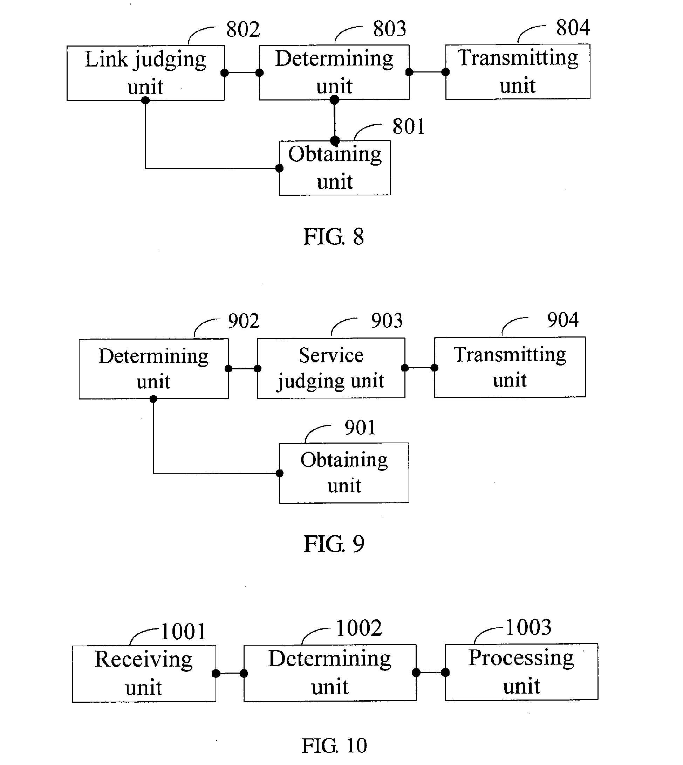

FIG. 8 describes a structure of a network node according to a second embodiment, which includes:
an obtaining unit 801, configured to obtain current link bandwidth information of a microwave link;
a link judging unit 802, configured to judge whether the current link bandwidth information obtained by the obtaining unit 801 is lower than optimal link bandwidth information;
a determining unit 803, configured to, when the link judging unit 802 judges that the current link bandwidth information is lower than the optimal link bandwidth information, determine, according a mapping relationship between link bandwidth information and service bandwidth information, corresponding to the current link bandwidth information obtained by the obtaining unit 801, service bandwidth information that is allocated to a service connection on which the microwave link is located ; and
a transmitting unit 804, configured to transmit the service bandwidth information that is allocated to the service connection to an endpoint of the service connection through the service connection, where the service bandwidth information is determined by the determining unit 803, so that the endpoint of the service connection adjusts a service policy according to the allocated service bandwidth information.

In an embodiment of the present invention, when the link judging unit 802 judges that the current link bandwidth information obtained by the obtaining unit 801 is the optimal link bandwidth information, the determining unit 803 does not determine the service bandwidth information that is allocated to the service connection corresponding to the current link bandwidth information. Therefore, the transmitting unit 804 stops transmitting the allocated service bandwidth information to the endpoint of the service connection on which the microwave link is located, so that the endpoint of the service connection performs service processing by using a normal service policy.

It can be seen from the preceding that, in this embodiment, the network node may obtain the current link bandwidth information of the microwave link, determine, according to the mapping relationship between the link bandwidth information and the service bandwidth information, corresponding to the current link bandwidth information, the service bandwidth information that is allocated to the service connection on which the microwave link is located, and transmit the allocated service bandwidth information to the endpoint of the service connection, so that the endpoint of the service connection may adjust the service policy according to the allocated service bandwidth information, and therefore, a bandwidth of the microwave link can meet a service requirement, and service congestion is avoided.

FIG. 9 describes a structure of a network node according to a third embodiment, which includes:
an obtaining unit 901, configured to obtain current link bandwidth information of a microwave link;
a determining unit 902, configured to determine, according a mapping relationship between link bandwidth information and service bandwidth information, corresponding to the current link bandwidth information obtained by the obtaining unit 901, service bandwidth information that is allocated to a service connection on which the microwave link is located;
a service judging unit 903, configured to judge whether the service bandwidth information that is allocated to the service connection is lower than optimal service bandwidth information, where the service bandwidth information is determined by the determining unit 902; and
a transmitting unit 904, configured to, when the service judging unit 903 judges that the service bandwidth information that is allocated to the service connection is lower than the optimal service bandwidth information, transmit the allocated service bandwidth information to an endpoint of the service connection through the service connection.

In an embodiment of the present invention, when the service judging unit 903 judges that the allocated service bandwidth information is the optimal service bandwidth information, where the allocated service bandwidth information is determined by the determining unit 902, the transmitting unit 904 stops transmitting the allocated service bandwidth information to the endpoint of the service connection on which the microwave link is located, so that the endpoint of the service connection performs service processing by using a normal service policy.

It can be seen from the preceding that, in this embodiment, the network node may obtain the current link bandwidth information of the microwave link, determine, according to the mapping relationship between the link bandwidth information and the service bandwidth information, corresponding to the current link bandwidth information, the service bandwidth information that is allocated to the service connection on which the microwave link is located, and transmit the allocated service bandwidth information to the endpoint of the service connection, so that the endpoint of the service connection may adjust the service policy according to the allocated service bandwidth information, and therefore, a bandwidth of the microwave link can meet a service requirement, and service congestion is avoided.

FIG. 10 describes a structure of a network node according to a fourth embodiment, which includes:
a receiving unit 1001, configured to receive service bandwidth information that is allocated for a service connection, where the allocated service bandwidth information is determined, according to a mapping relationship between link bandwidth information and service bandwidth information, by a network node that is attached by a microwave link, and the allocated service bandwidth information is service bandwidth information that is allocated to a service connection corresponding to current link bandwidth information;
a determining unit 1002, configured to, according to a preset mapping relationship between service bandwidth information and a service policy, determine a service policy corresponding to the service bandwidth information that is allocated to the service connection, where the service bandwidth information is received by the receiving unit 1001; and
a processing unit 1003, configured to perform service processing according to the service policy determined by the determining unit 1002.

It can be seen from the preceding that, in this embodiment, the network node may receive the service bandwidth information that is allocated to the service connection, where the service bandwidth information is transmitted by the network node that is attached by the microwave link, and adjust the service policy according to the allocated service bandwidth information, so that a bandwidth of the microwave link can meet a service requirement, and service congestion is avoided.

An embodiment of the present invention further provides a communication system. The communication system includes the network node provided in the embodiments of the present invention.

Content of information interaction and an execution process between each module of the preceding apparatus and system is based on the same concept as the method embodiments of the present invention. Therefore, specific content may be made reference to the description of the method embodiments of the present invention, which is not detailed here.

Persons of ordinary skill in the art may understand that all or part of the procedures of the method in the preceding embodiments may be implemented by a program instructing relevant hardware. The program may be stored in a computer readable storage medium. When the program runs, the procedures of the method in each preceding embodiment are executed. The storage medium may be a magnetic disk, a compact disk, a read only memory (ROM) or a random access memory (RAM).

The method for notifying bandwidth information, the method for processing a service, the network node, and the communication system that are provided in the embodiments of the present invention are described in detail in the preceding. The preceding description of the embodiments is only used to help understand the method and idea of the present invention; meanwhile, those skilled in the art may make variations to the specific implementation manner and application scope according to the idea of the present invention. In conclusion, the content of this specification shall not be construed as a limitation to the present invention.

## Claims

1. A method for notifying bandwidth information, comprising:
obtaining (101), by a network node that is attached by a microwave link, current link bandwidth information of the microwave link;
according a preset mapping relationship between link bandwidth information and service bandwidth information of a service connection that passes through the microwave link, when a bandwidth of the microwave link changes, determining (102), by the network node, service bandwidth information that is allocated to the service connection that passes through the microwave link; and
transmitting (103), by the network node, the allocated service bandwidth information to an endpoint of the service connection through the service connection;
according to a preset mapping relationship between service bandwidth information and a waterline of a service buffer area, adjusting, by the endpoint of the service connection, the waterline to a position corresponding to the allocated service bandwidth information.

2. The method for notifying bandwidth information according to claim 1, wherein a step of the obtaining the current link bandwidth information of the microwave link comprises:
detecting a current modulation mode of the microwave link, and obtaining bandwidth information of the microwave link under the current modulation mode.

## Patentansprüche

1. Verfahren zum Ankündigen von Bandbreiteninformationen, mit den folgenden Schritten:
ein Netzwerkknoten, der durch eine Mikrowellenstrecke angeschlossen ist, erhält (101) aktuelle Streckenbandbreiteninformationen der Mikrowellenstrecke;
der Netzwerkknoten bestimmt (102) gemäß einer voreingestellten Abbildungsbeziehung zwischen Streckenbandbreiteninformationen und Dienstbandbreiteninformationen einer Dienstverbindung, die durch die Mikrowellenstrecke verläuft, wenn sich eine Bandbreite der Mikrowellenstrecke ändert, Dienstbandbreiteninformationen, die an die Dienstverbindung vergeben werden, die durch die Mikrowellenstrecke verläuft; und
der Netzwerkknoten sendet (103) die vergebenen Dienstbandbreiteninformationen zu einem Endpunkt der Dienstverbindung durch die Dienstverbindung;
der Endpunkt der Dienstverbindung stellt gemäß einer voreingestellten Abbildungsbeziehung zwischen Dienstbandbreiteninformationen und einer Wasserlinie eines Dienstpufferbereichs die Wasserlinie auf eine Position ein, die den vergebenen Dienstbandbreiteninformationen entspricht.

2. Verfahren zum Ankündigen von Bandbreiteninformationen nach Anspruch 1, wobei ein Schritt des Erhaltens der aktuellen Streckenbandbreiteninformationen der Mikrowellenstrecke Folgendes umfasst:
Detektieren eines aktuellen Modulationsmodus der Mikrowellenstrecke und Erhalten von Bandbreiteninformationen der Mikrowellenstrecke unter dem aktuellen Modulationsmodus.

## Revendications

1. Procédé de notification d'informations de largeur de bande, comprenant les étapes consistant à :
obtenir (101), par un noeud de réseau relié par une liaison hertzienne à hyperfréquences, des informations de largeur de bande de liaison en cours concernant la liaison hertzienne à hyperfréquences ;
conformément à une relation de correspondance préétablie entre des informations de largeur de bande de liaison et des informations de largeur de bande de service concernant une connexion de service passant par la liaison hertzienne à hyperfréquences, lors d'un changement d'une largeur de bande de la liaison hertzienne à hyperfréquences, déterminer (102), par le noeud de réseau, des informations de largeur de bande de service allouées à la connexion de service passant par la liaison hertzienne à hyperfréquences ; et
transmettre (103), par le noeud de réseau, les informations de largeur de bande de service allouées à une extrémité de la connexion de service via la connexion de service ;
conformément à une relation de correspondance préétablie entre des informations de largeur de bande de service et une ligne de charge d'une zone tampon de service, régler, par l'extrémité de la connexion de service, la ligne de charge sur une position correspondant aux informations de largeur de bande de service allouées.

2. Procédé de notification d'informations de largeur de bande selon la revendication 1, dans lequel l'étape consistant à obtenir les informations de largeur de bande de liaison en cours concernant la liaison hertzienne à hyperfréquences comprend l'étape consistant à :
détecter un mode de modulation en cours de la liaison hertzienne à hyperfréquences, et obtenir des informations de largeur de bande concernant la liaison hertzienne à hyperfréquences dans le mode de modulation en cours.
